Europäisches Patentamt

European Patent Office

Office européen des brevets

(11) Veröffentlichungsnummer: **0 246 606**

**A2**

# (12) EUROPÄISCHE PATENTANMELDUNG

(21) Anmeldenummer: 87107253.4

(22) Anmeldetag: 19.05.87

(51) Int. Cl.⁴: **G01L 5/28**

(30) Priorität: 22.05.86 DE 3617263

(43) Veröffentlichungstag der Anmeldung:
25.11.87 Patentblatt 87/48

(84) Benannte Vertragsstaaten:
AT BE CH DE ES FR GB GR IT LI LU NL SE

(71) Anmelder: Technischer Überwachungsverein
Rheinland e.V.
Am Grauen Stein Konstantin-Wille-Strasse 1
D-5000 Köln 91(DE)

(72) Erfinder: **Stall, Eugen, Dr.-Ing.**
**Weissdornweg 29**
**D-5190 Stolberg(DE)**
Erfinder: **Heuser, Gerd, Dr.-Ing.**
**Von der Leyen Strasse 20**
**D-5000 Köln 80(DE)**

(74) Vertreter: **Langmaack, Jürgen, Dipl.-Ing. et al**
**Patentanwälte Maxton . Maxton . Langmaack**
**Goltsteinstrasse 93 Postfach 51 08 06**
**D-5000 Köln 51(DE)**

(54) **Verfahren zur Funktionsprüfung von Fahrzeugbremseinrichtungen mit automatischem Blockierverhinderer und Einrichtung zur Funktionsprüfung von Fahrzeugbremseinrichtungen, insbesondere zur Durchführung des Verfahrens.**

(57) Verfahren zur Funktionsprüfung von Fahrzeug-bremseinrichtungen mit automatischem Blockierver-hinderer, bei dem mit wenigstens einem, mit einer am zu prüfenden Rad anliegenden Treibrolle versehenen Antrieb das Rad mit einer Drehzahl angetrieben wird, die einer vorgegebenen Fahrgeschwindigkeit entspricht und dann durch Betätigung der Fahrzeugbremse ein Schlupf zwischen Rad und Antrieb bewirkt, wobei ohne Änderung der Haftbe-dingungen zwischen Rad und Treibrolle das auf das Rad wirkende Antriebsmoment in Abhängigkeit eines auf das Rad wirkenden Bremsmomentes zur Simulation eines Schlupfes verändert, vorzugsweise ver-mindert, vorzugsweise bei ansteigendem Bremsmo-ment vermindert wird.

## Verfahren zur Funktionsprüfung von Fahrzeugbremseinrichtungen mit automatischem Blockierverhinderer und Einrichtung zur Funktionsprüfung von Fahrzeugbremseinrichtungen, insbesondere zur Durchführung des Verfahrens

Die Erfindung betrifft ein Verfahren zur Funktionsprüfung von Fahrzeugbremseinrichtungen mit automatischem Blockierverhinderer, bei dem mit wenigstens einem, mit einer am zu prüfenden Rad anliegenden Treibrolle versehenen Antrieb das Rad mit einer Drehzahl angetrieben wird, die einer vorgegebenen Fahrgeschwindigkeit entspricht und dann durch Betätigung der Fahrzeugbremse ein Schlupf zwischen Rad und Antrieb bewirkt wird.

Um eine derartige Fahrzeugbremse prüfen zu können, muß das zu prüfende Rad mit höheren Drehzahlen angetrieben werden, als dies bei der normalen Prüfung des wirksamen Bremsmomentes einer Fahrzeugbremse der Fall ist, da je nach dem verwendeten System des automatischen Blockierverhinderers das Rad eine Mindestdrehzahl haben muß, damit das System überhaupt anspricht. Wegen der unterschiedlichen Systeme ist es daher erforderlich, daß zur Prüfung das Rad mit einer Drehzahl angetrieben wird, die einer Fahrgeschwindigkeit von mehr als 15 km/h entspricht. Zweckmäßig ist hierbei die Vorgabe einer Drehzahl, die einer Fahrgeschwindigkeit von etwa 50 km/h entspricht, um auch auf dem Prüfstand die Funktionsweise des automatischen Blockierverhinderers unter "Betriebsbedingungen" prüfen zu können.

Bei den bisher bekannten Verfahren wurde die Prüfung in der Weise vorgenommen, daß alle vier Räder eines Fahrzeugs gleichzeitig über jeweils eine am Rad anliegende Treibrolle mit Hilfe eines Antriebsmotors auf die vorgegebene Drehzahl gebracht wurden. Durch Betätigen der Fahrzeugbremse wurde nun auf die Räder ein Bremsmoment aufgebracht, das dem Antriebsmoment der Treibrollen entgegenwirkte, wobei die Drehzahl durch entsprechende Regelung im wesentlichen konstant gehalten wurde, um durch entsprechende Erhöhung des Bremsmomentes die Räder zu blockieren, so daß der übliche Schlupf zwischen Rad und Fahrbahn, hier zwischen Rad und Treibrolle auftrat. Ein derartiger Prüfstand ist nicht nur sehr kostspielig, da jedem Rad ein aus Treibrolle und elektrischem Antriebsmotor bestehender Antriebssatz mit hoher Leistung (mehr als 40 KW) zugeordnet sein muß, sondern hat auch noch den Nachteil, daß durch den erzwungenen Schlupf zwischen Rad und Treibrolle die Reifenoberfläche in Mitleidenschaft gezogen wird. Fir Werkstattuntersuchungen an fremden Fahrzeugen ist dieses Verfahren daher nicht anwendbar. Die Kosten für einen derartigen Prüfstand können zwar durch die Verwendung von Leistungspuffern, beispielsweise Schwungmassen etwas reduziert werden, der Nachteil, daß durch die Fahrzeugprüfung das Reifenmaterial in erheblichem Maße beansprucht wird, bleibt auch hierbei bestehen. Um nun zu wirklichkeitsnahen Meßergebnissen zu kommen, ist es zwar möglich, die Treibrolle mit einer entsprechenden Beschichtung zu versehen, um so den Haftbedingungen zwischen Rad und Fahrbahn der Treibrolle den tatsächlichen Bedingungen einigermaßen zu entsprechen. Der Nachteil des vorbekannten Verfahrens besteht jedoch immer darin, daß praktisch nur die Haftbedingungen einer trockenen Fahrbahn verwirklicht werden können, also Betriebsfälle, bei denen mit hohen Bremsmomenten das Rad zum Blockieren gebracht werden muß. Damit können aber die Betriebsbedingungen im wichtigsten Einsatzbereich eines automatischen Blockierverhinderers, nämlich bei nasser Fahrbahn oder bei Eisglätte nicht erzeugt und damit das Funktionsverhalten des Blockierverhinderers in diesem sehr wichtigen Bereich gar nicht geprüft werden.

Der Erfindung liegt nun die Aufgabe zugrunde, ein Prüfverfahren für Fahrzeugbremseinrichtung mit automatischem Blockierverhinderer zu schaffen, mit dem die vorstehenden Nachteile vermieden werden.

Diese Aufgabe wird nach dem erfindungsgemäßen Verfahren dadurch gelöst, daß ohne Änderung der Haftbedingungen zwischen Rad und Treibrolle das auf das Rad wirkende Antriebsmoment in Abhängigkeit eines auf das Rad wirkenden Bremsmomentes zur Simulation eines Schlupfes verändert, vorzugsweise vermindert, vorzugsweise bei ansteigendem Bremsmoment vermindert wird. Diese Verfahrensweise hat den Vorteil, daß an die Stelle eines tatsächlichen Schlupfes zwischen Rad und Treibrolle ein Schlupf im Antrieb simuliert wird. Wenn dem Bremsmoment am Rad ein nicht ausreichendes Antriebsmoment gegenübersteht, erfolgt am Rad ein Drehzahlabfall, der bei entsprechender Auslegung der Abhängigkeit zwischen Schlupf bzw. Treibrollendrehzahl und Antriebsmoment dem Drehzahlabfall entspricht, auf den das Ansprechen des automatischen Blockierverhinderers ausgelegt ist. Da bei der Prüfung der Pedaldruck aufrechterhalten wird, kann über eine Messung der Raddrehzahl und/oder des zeitlichen Verlaufs des Bremsmomentes abgelesen werden, ob der automatische Blockierverhinderer in seiner Funktion die geforderten Bedingungen erfüllt.

In zweckmäßiger Ausgestaltung der Erfindung ist hierbei vorgesehen, daß die Änderung des Antriebsmomentes unter Einwirkung des Bremsmomentes im wesentlichen vorgebbaren Haft-und Schlupfbedingungen zwischen Rad und Fahrbahn entspricht. Hierdurch kann bei der Schlupfsimulation berücksichtigt werden, daß die Reibwerte zwischen Rad, d.h. Fahrzeugreifen und Fahrbahnoberfläche schlupfabhängig sind, wobei sich für die unterschiedlichen Fahrbahnoberflächen bzw. Fahrbahnbeschaffenheiten erhebliche Unterschiede ergeben. Ausschlaggebend ist hierbei, daß jede Fahrbahnoberfläche bzw. jede Fahrbahnbeschaffenheit jeweils einen charakteristischen Zusammenhang zwischen maximalem Reibbeiwert und zugeordnetem Schlupf aufweist. Bei Berücksichtigung dieser Werte kann dann über eine entsprechende Ansteuerung eine Schlupfsimulation herbeigeführt werden.

Die Erfindung betrifft ferner eine Vorrichtung zur Funktionsprüfung von Fahrzeugbremseinrichtungen, insbesondere Fahrzeugbremseinrichtungen mit automatischem Blockierverhinderer nach dem Verfahren der Ansprüche 1 und 2 mit wenigstens einem am zu prüfenden Rad angreifenden Antrieb, der eine Treibrolle und einen Antriebsmotor mit einer Drehmoment-und/oder Drehzahlmeßeinrichtung aufweist.

Erfindungsgemäß ist nun vorgesehen, daß der Antrieb mit einer Einrichtung zur Änderung, vorzugsweise Verminderung des Antriebsmomentes insbesondere zur Schlupfsimulation in Abhängigkeit vom Bremsmoment versehen ist und daß die Treibrollenoberfläche einen hohen Reibbeiwert in bezug auf die Lauffläche des zu prüfenden Rades aufweist. Der für die Funktionsprüfung eines automatischen Blockierverhinderers notwendige Schlupf zwischen Bremsmoment und Gegenmoment wird damit nicht mehr zwischen Rad und Treibrolle erzeugt, sondern im Bereich des Antriebes simuliert.

Im Extremfall kann eine derartige Einrichtung so aufgebaut sein, daß jeweils nur ein Rad überprüft wird, so daß zur Funktionsprüfung der Bremseinrichtung insgesamt der Reihe nach alle vier Räder zu untersuchen sind. Zweckmäßigerweise ist jedoch die erfindungsgemäße Einrichtung so ausgebildet, daß allen vier Rädern jeweils ein Antrieb mit Treibrolle zugeordnet ist, so daß alle Räder gleichzeitig überprüft werden können.

Der Vorteil einer derartigen Vorrichtung besteht darin, daß der für die Funktionsüberprüfung erforderliche Schlupf nicht mehr zwischen Treibrolle und Reifen erzeugt wird, sondern in ein gesondertes Bauelement im Prüfstand verlegt wird, das so ausgelegt wird, wie die Reibpaarung zwischen Reifen und Fahrbahn. Damit entfällt der Schlupf zwischen Treibrolle und Reifen und jede Abnutzung durch den Prüfvorgang, die Einflüsse zwischen Reifen und Rollenoberfläche werden vernachlässigbar und verfälschen nicht das Meßergebnis. Damit ergeben sich reproduzierbare Meßwerte, die bei Reihenuntersuchungen von Fahrzeugbremseinrichtungen mit automatischem Blockierverhinderer gleicher Bauart oder unterschiedlicher Bauart unmittelbare Vergleiche zulassen.

In einer besonders vorteilhaften Ausgestaltung der Erfindung ist vorgesehen, daß die Einrichtung zur schlupfmomentabhängigen Änderung des Antriebsmomentes durch einen elektrischen Asynchronmotor als Antriebsmotor gebildet wird, dessen Kippmoment höchstens gleich, vorzugsweise geringer ist als das durch die Haftbedingungen vorgegebene maximale Reibmoment zwischen Treibrolle und Lauffläche des Rades. Ein Asynchronmotor ist nicht nur ein robustes und preiswertes Bauteil, sondern hat auch noch den Vorteil, daß er eine Chlupfcharakteristik aufweist. Die Schlupfcharakteristik kann sowohl durch elektrische als auch durch konstruktive Maßnahmen vorgegeben werden. Besonders zweckmäßig ist hierbei ein Asynchronmotor mit Kurzschlußläufer, da dieser in seiner Schlupfcharakteristik so ausgelegt werden kann, daß er der Schlupfcharakteristik der Reibpaarung zwi-schen Reifen und Glatteis-Fahrbahn entspricht. Hierdurch ist es erstmals möglich, verschleißfrei, reproduzierbar und unabhängig von äußeren Einflüssen den Bremsvorgang auf Glatteis zu simulieren. Hieraus resultieren eine weitere Reihe von Vorteilen. Da für die Reibpaarung "Reifen/Glatteis" nur ein geringes Bremsmoment aufzubringen ist, um gegen die Wirkung des Reibmomentes bzw. Antriebsmomentes das abzubremsende Rad zu blockieren, ist für die Simulation auch nur eine geringe Antriebsleistung notwendig. Diese liegt im Bereich von etwa 5 KW. Damit wird nicht nur der konstruktive Aufwand für einen derartigen Prüfstand geringer sondern darüber hinaus ergibt sich auch für das Prüfungsverfahren der Vorteil, daß ein automatischer Blockierverhinderer unter den ungünstigsten Betriebsbedingungen, nämlich bei großer Pedalkraft, jedoch niederiger Bremskraft in seiner Funktion geprüft werden kann. Von Bedeutung ist hierbei, daß die Charakteristik des Schlupfes "Reifen/Glatteis" ohne zusätzliche Steuerelektronik möglich ist, da durch rein konstruktive Maßnahmen beim Aufbau des Kurzschlußläufers für den Motor eine praktisch gleiche Kraft/Schlupfcharakteristik aufgebaut werden kann. Je nach Auslegung des zu untersuchenden Bremssystems mit automatischem Blockierverhinderer sind auch Dauerversuche möglich, d.h. es kann auch eine Gefällefahrt bei Glatteis simuliert werden, da der Schlupf völlig verschleißfrei erfolgt.

In Ausgestaltung der Erfindung ist vorgesehen, daß als Einrichtung zur bremsmomentabhängigen Änderung des Antriebsmomentes zwischen Antriebsmotor und Treibrolle ein Schlupfelement angeordnet ist. Hierdurch ist es möglich, unterschiedliche Schlupfcharakteristiken vorzugeben, beispielsweise durch Auswechseln entsprechend ausgelegter Schlupfelemente. Zweckmäßigerweise ist das Schlupfelement in seiner Schlupfcharakteristik einstellbar ausgebildet. Das Schlupfelement kann hierbei in Form eines Kupplungselementes nach Art einer Rutschkupplung aufgebaut sein, wobei die Reibpaarung nach der gewünschten Schlupfcharakteristik vorgegeben wird. Die Reibpaarung kann hierbei sowohl für eine "trockene" als auch für eine "nasse" Reibung mit entsprechender Schlupfcharakteristik ausgelegt werden. Besonders zweckmäßig ist hierbei als Schlupfelement eine vorzugsweise steuerbare Magnetpulverkupplung. Durch eine entsprechende Steuerung des Erregerstroms einer derartigen Magnetpulverkupplung lassen sich die unterschiedlichsten Schlupfcharakteristiken simulieren. Auch bei der Verwendung von Schlupfelementen gilt wieder als Randbedingung, daß das maximale "Schlupfmoment" geringer sein muß als das vorhandene Reibmoment zwischen der Lauffläche des Rades und der Treibrolle.

In einer besonders zweckmäßigen Ausgestaltung der Erfindung ist vorgesehen, daß bei der Verwendung eines elektrischen Asynchronmotors als Antriebsmotor zwischen Antriebsmotor und Treibrolle jeweils ein Schaltgetriebe zur Einstellung unterschiedlicher Raddrehzahlen angeordnet ist. Vorzugsweise ist hierbei ein Reduktionsgetriebe vorgesehen, das so ausgelegt ist, daß zur Prüfung eines Fahrzeugs mit automatischem Blockierverhinderer der Asynchronmotor die Treibrolle direkt antreibt, so daß die Schlupfcharakteristik des Asynchronmotors zur Wirkung kommt, und daß zur normalen Bremsprüfung durch das Schaltgetriebe die Drehzahl des zu prüfenden Rades reduziert wird auf die übliche Drehzahl, die etwa einer Fahrgeschwindigkeit von 5 km/h entspricht. Hierdurch wird erreicht, daß der Asynchronmotor im Bereich zwischen Synchron- und Nenndrehzahl arbeitet und bei Betätigung der Bremse praktisch ein entsprechendes Gegenmoment auf das Rad bringt, ohne daß der Blockierverhinderer ansprechen kann und so unmittelbar über die Drehmomentmeßeinrichtung die normale Bremsfunktion über-prüft werden kann.

In einer anderen Ausgestaltung der Erfindung ist vorgesehen, daß je Rad zwei parallele Treibrollen vorgesehen sind, daß jede Treibrolle mit einem Asynchronmotor verbunden ist, wobei der eine Asynchronmotor direkt mit einer Treibrolle gekoppelt ist und gleichzeitig als Schlupfelement wirkt und der andere Asynchronmotor unter Zwischenschaltung eines Reduktionsgetriebes mit der anderen Treibrolle gekoppelt ist und ein im wesentlichen drehzahlunabhängiges Antriebsmoment liefert. Diese Ausbildung erfordert zwar zwei Antriebsmotoren je Rad, bei einem Vollprüfstand also acht Antriebsmotoren, hat jedoch den Vorteil, daß an die Stelle eines Schaltgetriebes ein starres Reduktionsgetriebe vorgesehen ist und damit ein geringerer Bauaufwand und einfachere Betriebsbedingungen gegeben sind. Je nach Ausgestaltung kann zwischen dem Reduktionsgetriebe und der Treibrolle ein Freilauf angeordnet sein oder aber zwischen den beiden Treibrollen zur wahlweisen Abstützung des Rades eine loselaufende Stützrolle angeordnet sein.

In weiterer vorteilhafter Ausgestaltung der Erfindung ist vorgesehen, daß je Fahrzeugrad ein Antrieb vorgesehen ist und daß jeder Antriebsmotor für sich mit einer Drehzahlregeleinrichtung versehen ist und daß eine mit dem zugehörigen Rad und/oder der Treibrolle verbindbare Drehzahlmeßeinrichtung vorgesehen ist. Auch für eine derartige Ausgestaltung der erfindungsgemäßen Vorrichtung ist die Verwendung von Asynchronmotoren als Antriebsmotoren möglich, da eine Drehzahlregelung über Frequenzwandler üblich ist, so daß auch hier ein verhältnismäßig geringer Aufwand für einen derartigen Prüfstand getrieben werden muß. Der Vorteil einer derartigen Ausgestaltung besteht nicht nur darin, daß die über die Raddrehzahl vorzugebenden Fahrgeschwindigkeiten in einfacher Weise variiert werden können, sondern der entscheidende Vorteil besteht darin, daß es mit einer derartigen Ausgestaltung erstmals möglich wird, Bremsprüfungen an allradgetriebenen Fahrzeugen mit Kraftverteilungssystemen und eine Funktionsprüfung der Kraftverteilungssysteme selbst (was auch ohne Drehzahlregelung möglich wäre) durchzuführen, was bisher nicht möglich war.

Für die normale Funktionsprüfung einer Bremse ergibt sich nunmehr die Möglichkeit, über die vier Antriebsmotoren bei Betätigung der Bremse jedes Rad mit der gleichen, konstanten Drehzahl zu betreiben, so daß aus dem am Antriebsmotor gemessenen Drehmoment unmittelbar eine Aussage über das Bremsmoment bzw. die Bremskraft des zugehörigen Einzelrades möglich ist, ohne daß das Kraftverteilungssystem im Antrieb die Messung beeinflußt. Mit dem Prüfstand kann aber auch die Funktion des Kraftverteilungssystems bei Allradantrieben überprüft werden und zwar unmittelbar über die Drehmomentmessung an den einzelnen Antriebsmotoren, wenn diese mit unterschiedlichen Drehzahlen je Achse oder auch je Rad betrieben werden.

Die Erfindung wird anhand schematischer Zeichnungen näher erläutert. Es zeigen:

Fig. 1 in einem Diagramm die Haftbedingungen zwischen Reifen und Fahrbahn mit unterschiedlichen Schlupfcharakteristiken,

Fig. 2 ein Diagramm der Drehmoment/Schlupfcharakteristik eines elektrischen Asynchron-Kurzschlußläufermotors,

Fig. 3 schematisch einen Bremsenprüfstand,

Fig. 4 eine Aufsicht auf die Rollenanordnung des Bremsprüfstands gem. Fig. 3,

Fig. 5 eine andere Ausgestaltung der Rollenanordnung,

Fig. 6 eine weitere Ausgestaltungsmöglichkeit für die Rollenanordnung.

Fig. 7 eine Anordnung mit gesondertem Schlupfelement.

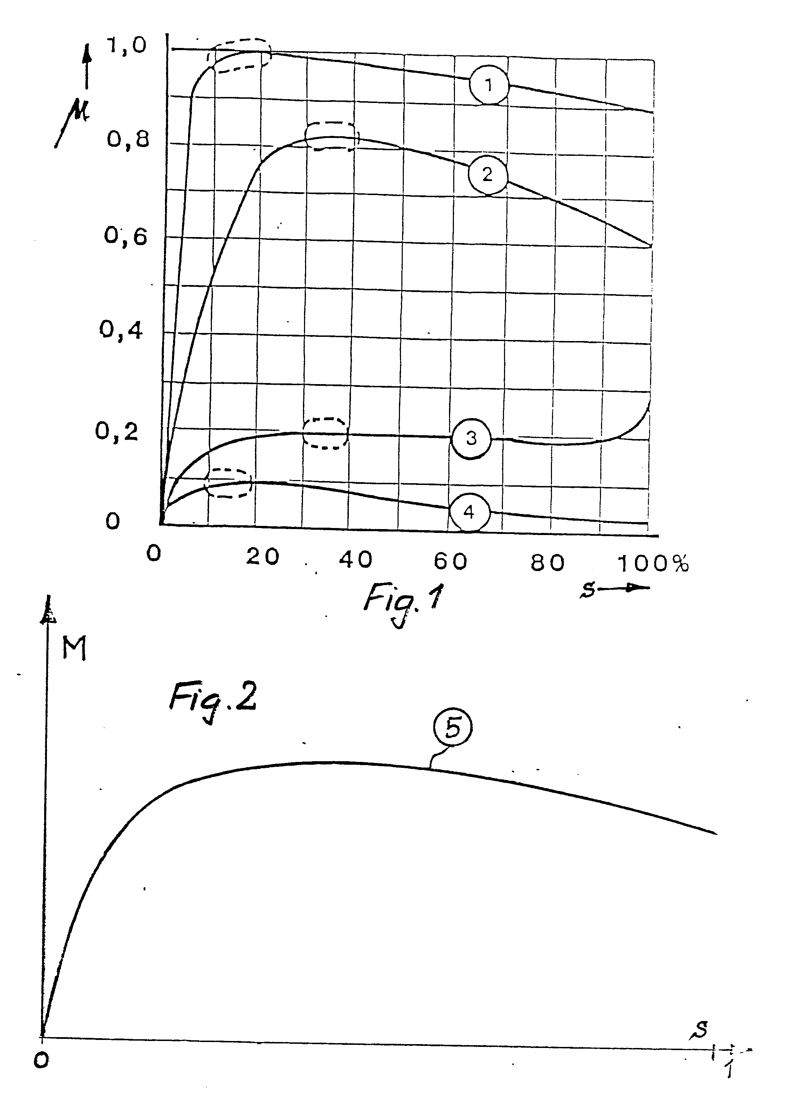

In dem Diagramm gem. Fig. 1 ist die Abhängigkeit des Reibbeiwertes $\mu$ zwischen Kraftfahrzeugreifen und Fahrbahn bei unterschiedlichen Fahrbahnoberflächen dargestellt. Die Kurve 1 gilt hierbei für trockenen Asphalt, die Kurve 2 für nassen Asphalt, die Kurve 3 für losen Schnee und die Kurve 4 für Glatteis.

Während es sicherlich noch möglich ist, die Kurven 1 und 2 durch entsprechende Beläge auf den Treibrollen eines Prüfstandes zu reproduzieren und bei einem entsprechend starken Antriebsmoment durch Abbremsen des angetriebenen Rades dieses auf der Treibrolle zu blockieren und den Schlupf zu erzeugen, läßt sich eine Schlupfcharakteristik für die Fahrbahnverhältnisse "loser Schnee" bzw. "Glatteis" auf einem Prüfstand nicht verwirklichen, wenn man dies über eine Beeinflussung der Haftbedingungen zwischen Lauffläche des Rades und Treibrolle bewirken will.

Da andererseits der Reibbeiwert $\mu$ direkt proportional zu dem bei den jeweiligen Fahrbahnoberflächen zwischen Rad und Oberfläche übertragbaren Bremsmoment ist, wird bei dem Verfahren der umgekehrte Weg beschritten. Auf dem Prüfstand wird für optimale Haftbedingungen zwischen Reifen und Treibrolle gesorgt und der Antrieb mit einer Einrichtung zur Änderung des Antriebsmomentes in Abhängigkeit vom Bremsmoment versehen. Hierzu ist es erforderlich, daß beim Aufbringen des Bremsmomentes das Antriebsmoment zumindest in den hier zu untersuchenden Drehzahlbereichen den gleichen Verlauf aufweist, wie die empirisch ermittelten Schlupfcharakteristiken für die gewünschten Fahrbahnoberflächen. Da für die Untersuchung eines automatischen Blockierverhinderers jedoch nur ein Teilbereich des jeweiligen Kurvenverlaufes zu realisieren ist, da es ja gerade Aufgabe des automatischen Blockierverhinderers ist, bei einem bestimmten Schlupf, d.h. einem überproportionalen Drehzahlabfall die Bremse automatisch wieder zu lösen, genügt es auch für die Funktionsprüfung die Übereinstimmung zwischen der empirisch ermittelten Schlupfcharakteristik zwischen Lauffläche des Rades und Fahrbahn nur für einen geringen Bereich zu simulieren.

Als konstruktiv einfache, aber vielseitig einsetzbare Simulationseinrichtung hat sich ein Asynchron-Kurzschlußläufermotor gezeigt. Wie das in Fig. 2 dargestellte Drehmoment/Schlupfdiagramm zeigt, kann man einem Kurzschlußläufermotor bei entsprechender Gestaltung des Läufers eine Schlupfcharakteristik geben, wie sie durch den Kurvenverlauf 5 dargestellt ist. Vergleicht man nun den Verlauf der Kurve 5 mit dem Verlauf der Kurve 4 in Fig. 1 in dem hier interessierenden Bereich, so ist zu erkennen, daß beide Kurven praktisch den gleichen charakteristischen Verlauf aufweisen. Legt man nun die Leistung des Antriebsmotors so aus, daß sein Kippmoment höchstens dem durch die vorgegebene Schlupfverbindung zwischen Reifen und Fahrbahn übertragbaren maximalen Moment entspricht, so ist zu ersehen, daß ohne Schlupf zwischen Rad und Treibrolle, beispielsweise bei einer Charakteristik gem. Kurve 5 in Fig. 2, die Schlupfcharakteristik gem. Kurve 4 in Fig. 1 bei Betätigen der Bremse simuliert werden kann. Das bedeutet aber auch, daß bei einer Betätigung der Fahrzeugbremse - schon mit geringer Bremskraft die Blockiersituation herbeigeführt werden kann und festgestellt werden kann, ob der automatische Blockierverhinderer auch unter diesen ungünstigen Bedingungen, d.h. mit geringer Bremskraft zuverlässig und einwandfrei arbeitet.

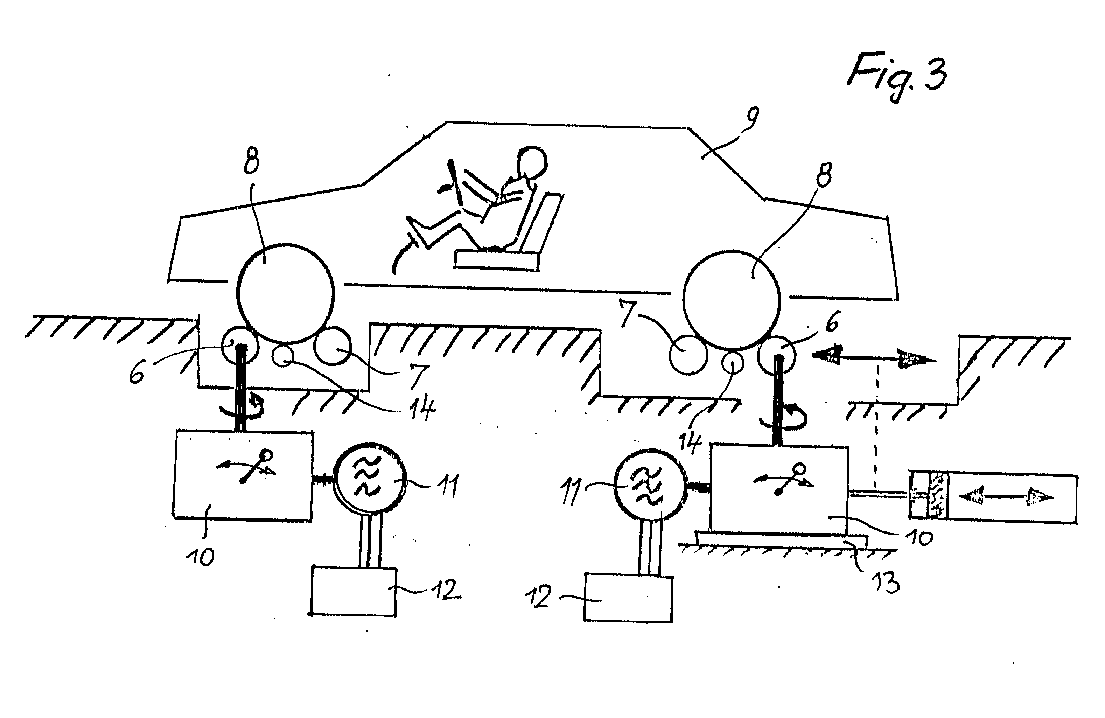

In Fig. 3 ist in einer schematischen Seitenansicht ein Bremsprüfstand gezeigt, der so ausgerüstet ist, daß neben dem Prüfverfahren für Bremsen mit automatischem Blockierverhinderer bei gleichem Antrieb auch eine normale Bremsprüfung durchgeführt werden kann. Der Prüfstand ist hierbei für alle vier Räder jeweils mit einer Treibrolle 6 und einer leerlaufenden Stützrolle 7 versehen. Treibrolle 6 und Stützrolle 7 weisen hierbei den für Rollenprüfstände üblichen Abstand auf, so daß das zu prüfende Rad 8 zwischen beiden Rollen sicher gehalten ist.

Jede Treibrolle 6 ist über ein Zweiganggetriebe 10 mit einem elektrischen Asynchron-Kurzschlußläufermotor 11 verbunden. Das Zweiganggetriebe ist hierbei so ausgebildet, daß in einer Schaltstufe der Asynchronmotor 11 die Treibrolle mit einer Drehzahl antreibt, die bezogen auf den Rollenumfang einer Fahrgeschwindigkeit von beispielsweise 50 km/h entspricht. In der anderen Schaltstellung dient das Getriebe als Reduktionsgetriebe, so daß die Drehzahl der Treibrolle 6 einer Fahrgeschwindigkeit von 5 km/h entspricht. Alle Antriebsmotoren 11 sind über einen zugeordneten Frequenzwandler 12 in gewissen Bereichen drehzahlregelbar.

Für eine Fahrzeugachse sind nun die beiden aus Treibrolle 6, Stützrolle 7, Getriebe 10 und Antriebsmotor 11 jeweils gebildeten Antriebe, bei dem dargestellten Beispiel für die Hinterachse, auf einem Schlitten 13 gelagert, der in horizontaler Richtung über entsprechende Stellantriebe, beispielsweise einen Hydraulikantrieb, verschiebbar sind, so daß der Prüfstand jeweils auf den Radstand des zu untersuchenden Fahrzeuges 9 eingestellt werden kann.

Mit dem vorstehend schematisch dargestellten Prüfstand lassen sich nun praktisch alle Bremsfunktionen prüfen, auch an Kraftfahrzeugen mit Vierradantrieben mit automatischer Kraftverteilung.

Zur Prüfung eines Fahrzeugs mit automatischem Blockierverhinderer werden die Getriebe 10 der vier Antriebe in die erste Schaltstellung gestellt, so daß die Räder 8 mit einer Drehzahl angetrieben werden, die einer Fahrgeschwindigkeit von 50 km/h entsprechen. Wird nunmehr von dem im Fahrzeug befindlichen Prüfer die Bremse betätigt, so wirkt das Bremsmoment an jedem Rad dem Antriebsmoment des Asynchronmotors an jedem Rad entgegen. Dabei verändert sich das auf das Rad 8 wirkende Antriebsmoment entsprechend der durch den Asynchronmotor vorgegebenen Schlupfcharakteristik, beispielsweise entsprechend der Kurve 5 in Fig. 2. Obwohl nun zwischen der Lauffläche des Rades 8 und der Treibrolle 6 keinerlei Schlupf vorhanden ist, ändert sich nun die Drehzahl des Rades 8 in gleicher Weise wie bei einer Bremsung auf Glatteis, so daß die dem Rad zugeordneten Sensoren des automatischen Blockierverhinderers bei ordnungsgemäßer Einstellung ansprechen und trotz des weiterbestehenden Pedaldruckes die Bremse entsprechend in kurzen Intervallen lösen. Da die Antriebsmotoren 11 mit einer Drehmomentmeßeinrichtung üblicher Bauart versehen sind, kann man nun an der Anzeige, beispielsweise in einem gleichzeitig erzeugten Meßschrieb überprüfen, ob der automatische Blokkierverhinderer rechtzeitig und in den vorgesehenen Intervallen unabhängig vom Pedaldruck den Bremsdruck steuert. Diese in den Prüfstand "eingebaute" Schlupfcharakteristik ist verschleißfrei und bietet die Gewähr reproduzierbarer und damit vergleichbarer Meßwerte. Damit ist beispielsweise die Möglichkeit gegeben, verschiedene Systeme unmittelbar miteinander zu vergleichen, aber auch zuverlässige Aussagen über den Zustand eines derartigen Systems zu machen, was insbesondere bei halbmechanischen Systemen wegen der bestehenden Verschleißmöglichkeit vorteilhaft ist.

Die Asynchronmotoren 11 sind hierbei beispielsweise durch Auswahl der Polzahl so ausgelegt, daß die erzeugte Drehgeschwindigkeit des Rades in etwa einer Geschwindigkeit von 50 km/h entspricht, und in ihrer Leistung so ausgelegt, daß sie eine Antriebsleistung von etwa 5 KW an der Treibrolle 6 abgeben. Hieraus läßt sich ablesen, daß schon bei geringen Pedaldrücken der Antriebsmotor 11 über das Bremsmoment angehalten, d.h. ein Schlupf von 100 % erzeugt werden könnte, sofern dies nicht durch den automatischen Blockierverhinderer unterbunden würde.

Bei entsprechender Auslegung des Asynchronmotors kann die Treibrolle 6 direkt angetrieben werden, um eine Drehzahl entsprechend einer Fahrgeschwindigkeit von 50 km/h zu erzeuen. Hierbei ist dann jeweils das Getriebe 10 außer Funktion. Schaltet man nun das Getriebe 10 zu, das als Reduktionsgetriebe wirkt, so ergibt sich bei entsprechenden Übersetzungsverhältnissen für die Treibrolle 6 eine annähernd stabile Drehzahl entsprechend 5 km/h. Damit wird ein sehr großes Antriebsmoment an den Rädern 8 wirksam, so daß unmittelbar auch die Bremskraft an den einzelnen Rädern gemessen werden kann.

Bei Fahrzeugen mit speziellen Allradkonzepten ist eine Bremskraftprüfung mit konventionellen Prüfständen überhaupt nicht möglich, da die Kopplung der einzelnen Räder über den Antriebsstrang unterschiedliche Bremskräfte an den einzelnen Rädern ausgleichen würde und so Defekte an den Bremsen der einzelnen Räder nicht entdeckt werden könnten. Greift man nun an jedem Rad z. B. über eine Tastrolle 14 die Drehzahl ab und regelt die Asynchronmotoren 11 über die Frequenzwandler 12 so ein, daß alle Räder die gleiche konstante Drehzahl aufweisen, so läßt sich auch bei den heute bekannten Fahrzeugen mit Allradantrieb an jedem Rad die tatsächlich wirkende Bremskraft messen, ohne daß das Kraftverteilungssystem im Fahrzeugantrieb die Messung beeinflußt.

Mit dem Prüfstand läßt sich auch eine automatische Schlupfregelung eines Fahrzeuges überprüfen. Bei bestimmten Systemen kann man über eine entsprechende Drehzahlverstellung der Asynchronmotoren 11 den Rädern unterschiedliche Drehzahlen aufzuzwingen. Aus den an den einzelnen Antrieben gemessenen Drehmomenten bzw. Drehzahlen läßt sich dann ableiten, ob und in welchem Maße über die Schlupfregelung erfolgt. Bei anderen Systemen genügt es hierzu, an den Antrieben der Räder die Drehmomente bzw. die Drehzahlen zu messen.

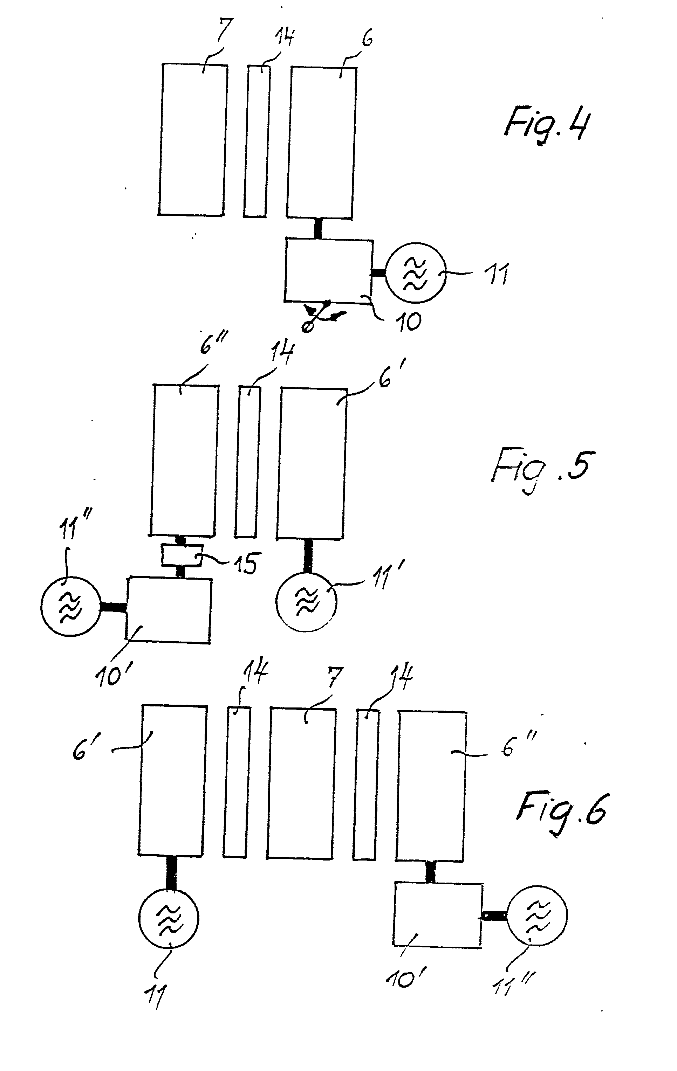

In den Fig. 4, 5 und 6 werden unterschiedliche Anordnungen für die Antriebsrollen und die Stützrollen gezeigt. Fig. 4 zeigt hierbei in einer Aufsicht die Anordnung nach Fig. 3 mit einem Reduktionsgetriebe im Übersetzungsverhältnis 1 : 10, das beispielsweise elektrisch schaltbar ist.

Da schaltbare Getriebe teuer sind und beim Schalten wegen der mechanischen Schaltvorgänge bestimmte Betriebsbedingungen eingehalten werden müssen, ist in der in Fig. 5 dargestellten Ausgestaltung die Anordnung dahingehend vereinfacht, daß für die Prüfung der Funktion eines Blockierverhinderers eine Treibrolle 6' unmittelbar mit einem entsprechend ausgelegten Asynchronmotor 11 gekuppelt ist und eine zweite Treibrolle 6" mit einem zweiten Asynchronmotor 11" über ein starres Getriebe unter Zwischenschaltung eines Freilaufs 15 gekuppelt ist. Bei der Funktionsprüfung eines Blockierverhinderers hat hierbei die Treibrolle 6" wegen des Freilaufs 15 die Funktion der leerlaufenden Stützrolle 7. Der Antriebsmotor 11" bleibt abgeschaltet. Wird andererseits eine normale Bremsprüfung durchgeführt, so erfolgt der Antrieb über die Treibrolle 6", während die Treibrolle 6' die Funktion der leerlaufenden Stützrolle übernimmt.

In Fig. 6 ist dann noch eine Abwandlung dargestellt, bei der zwischen einer Treibrolle 6' und einer Treibrolle 6" eine Stützrolle angeordnet ist, wobei die Treibrolle 6" ohne Zwischenschaltung eines Freilaufs über das Getriebe mit dem zugehörigen Antriebsmotor 11" gekoppelt ist. Je nach der vorgesehenen Prüfung wird dann das Fahrzeug so auf den Prüfstand gefahren, daß das Rad entweder von der Treibrolle 6' und der Stützrolle 7 oder von der Treibrolle 6" und der Stützrolle 7 getragen wird.

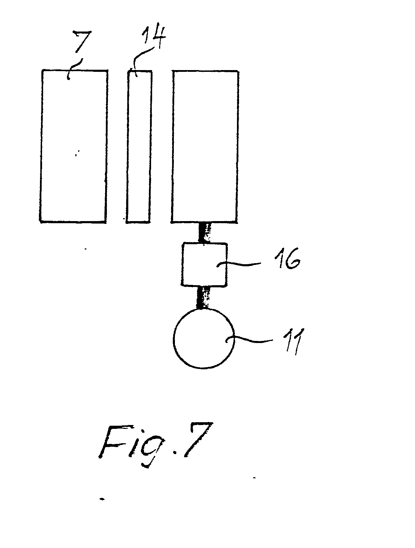

Legt man den Antriebsmotor 11 nun so aus, daß er auch für die Prüfung eines Blockierverhinderers mit im wesentlichen schlupfabhängigem Antriebsmoment arbeitet, so muß zwischen der Treibrolle und dem Antriebsmotor ein gesondertes Schlupfelement angeordnet werden. Dies kann beispielsweise eine elektrisch steuerbare Magnetpulverkupplung sein. Eine derartige Anordnung ist in Fig. 7 schematisch dargestellt. Durch entsprechende Steuerung des Erregerstroms der Kupplung, beispielsweise in Abhängigkeit von der Drehzahl des zu prüfenden Rades 8 können hier in Verbindung mit entsprechenden Steuerelektroniken verschiedene Schlupfcharakteristiken für die Prüfung vorgegeben werden.

## Ansprüche

1. Verfahren zur Funktionsprüfung von Fahrzeugbremseinrichtungen mit automatischem Blockierverhinderer, bei dem mit wenigstens einem, mit einer am zu prüfenden Rad anliegenden Treibrolle versehenen Antrieb das Rad mit einer Drehzahl angetrieben wird, die einer vorgegebenen Fahrgeschwindigkeit entspricht und dann durch Betätigung der Fahrzeugbremse ein Schlupf zwischen Rad und Antrieb bewirkt wird, dadurch **gekennzeichnet**, daß ohne Änderung der Haftbedingungen zwischen Rad und Treibrolle das auf das Rad wirkende Antriebsmoment in Abhängigkeit eines auf das Rad wirkenden Bremsmomentes zur Simulation eines Schlupfes verändert, vorzugsweise vermindert, vorzugsweise bei ansteigendem Bremsmoment vermindert wird.

2. Verfahren nach Anspruch 1, dadurch gekennzeichnet, daß die Änderung des Antriebsmomentes unter Einwirkung des Bremsmomentes im wesentlichen vorgebbaren Haft- und Schlupfbedingungen zwischen Rad und Fahrbahn entspricht.

3. Vorrichtung zur Funktionsprüfung von Fahrzeugbremseinrichtungen, insbesondere Fahrzeugbrameinrichtungen mit automatischem Blockierverhinderer nach dem Verfahren der Ansprüche 1 und 2, mit wenigstens einem am zu prüfenden Rad angreifenden Antrieb, der eine Treibrolle und einen Antriebsmotor mit einer Drehmoment-und/oder Drehzahlmeßeinrichtung aufweist, dadurch gekennzeichnet, daß der Antrieb (6, 11) mit einer Einrichtung zur Änderung, vorzugsweise Verminderung des Antriebsmomentes , insbesondere zur Schlupfsimulation, in Abhängigkeit vom Bremsmoment versehen ist und daß die Oberfläche der Treibrolle (6) einen hohen Reibbeiwert in bezug auf die Lauffläche des zu prüfenden Rades aufweist.

4. Vorrichtung nach Anspruch 3, dadurch gekennzeichnet, daß die Einrichtung zur - schlupfabhängigen Änderung des Antriebsmomentes durch einen elektrischen Asynchronmotor (11) als Antriebsmotor gebildet wird, dessen Kippmoment höchsten gleich, vorzugsweise geringer ist als das durch die Haftbedingungen vorgegebene maximale Reibmoment zwischen Treibrolle (6) und Lauffläche des Rades (8).

5. Vorrichtung nach Anspruch 3. dadurch gekennzeichnet, daß als Einrichtung zur bremsmomentabhängigen Änderung des Antriebsmomentes zwischen Antriebsmotor (11) und Treibrolle (6) ein Schlupfelement (16) angeordnet ist.

6. Vorrichtung nach Anspruch 5, dadurch gekennzeichnet, daß das Schlupfelement (16) in seiner Schlupfcharakteristik einstellbar ausgebildet ist.

7. Vorrichtung nach Anspruch 5 oder 6, dadurch gekennzeichnet, daß das Schlupfelement durch eine vorzugsweise steuer bare Magnetpulverkupplung gebildet wird.

8. Vorrichtung nach einem der Ansprüche 3 bis 7, dadurch gekennzeichnet, daß bei der Verwendung eines elektrischen Asynchronmotors (11") als Antriebsmotor zwischen Antriebsmotor und Treibrolle (6) jeweils ein Schaltgetriebe (10) zur Einstellung unterschiedlicher Raddrehzahlen angeordnet ist.

9. Vorrichtung nach einem der Ansprüche 3 bis 8, dadurch gekennzeichnet, daß je Rad (8) zwei parallele Treibrollen (6', 6") vorgesehen sind, daß jede Treibrolle (6', 6") mit einem Asynchronmotor (11', 11") versehen ist, wobei der eine Asynchronmotor (11') direkt mit einer Treibrolle (6') gekoppelt ist und gleichzeitig als Schlupfelement wirkt und der andere Asynchronmotor (11") unter Zwischenschaltung eines Reduktionsgetriebes (10') mit der anderen Treibrolle (6") gekoppelt ist und ein im wesentlichen drehzahlunabhängiges Antriebsmoment liefert.

10. Vorrichtung nach Anspruch 9, dadurch gekennzeichnet, daß bei dem Antriebsmotor (11") zwischen Getriebe (10') und Treibrolle (6") ein Freilauf (15) angeordnet ist.

11. Vorrichtung nach Anspruch 9, dadurch gekennzeichnet, daß zwischen den beiden Treibrollen (6', 6") zur wahlweisen Abstützung des Rades (8) eine loselaufende Stützrolle (7) angeordnet ist.

12. Vorrichtung nach einem der Ansprüche 3 bis 11, dadurch gekennzeichnet, daß je Fahrzeugrad (8) ein Antrieb vorgesehen ist und daß jeder Antriebsmotor (11) für sich mit einer Drehzahlregeleinrichtung versehen ist und daß eine mit dem zugehörigen Fahrzeugrad (8) und/oder der Treibrolle verbindbare Drehzahlmeßeinrichtung vorgesehen ist.

Fig.1

Fig.2

Fig. 3

0 246 606

Fig.4

Fig.5

Fig.6

Fig. 7